# FASCICULE DE BREVET EUROPEEN

(11) **EP 3 003 739 B1**
(45) Date de publication et mention de la délivrance du brevet: **03.05.2017**
(21) Numéro de dépôt: 14726156.4
(22) Date de dépôt: 23.05.2014
(51) Int. Cl.: B60C 1/00, C08K 5/3445, C08L 15/00, C08K 5/092, C08L 63/08, C08L 23/30

(54) **PNEUMATIQUE COMPORTANT UNE COMPOSITION DE CAOUTCHOUC COMPRENANT UN ELASTOMERE OLEFINIQUE EPOXYDE RETICULE PAR UN POLY-ACIDE CARBOXYLIQUE**
REIFEN MIT EINER KAUTSCHUKZUSAMMENSETZUNG MIT EINEM POLYCARBONSÄUREVERNETZTEN OLEFINISCHEN EPOXIDELASTOMER
TYRE COMPRISING A RUBBER COMPOSITION COMPRISING AN OLEFINIC EPOXIDE ELASTOMER CROSS-LINKED BY A POLYCARBOXYLIC ACID

(30) Priorité: 28.05.2013 FR 1354833
(43) Date de publication de la demande: 13.04.2016
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SCHNELL, Benoit, F-63040 Clermont-Ferrand Cedex 9 (FR); FLEURY, Etienne, F-63040 Clermont Ferrand Cedex 9 (FR)
(74) Mandataire: Sidhu, Alban
(86) Numéro de dépôt international: PCT/EP2014/060686
(87) Numéro de publication internationale: WO 2014/191315

(56) Documents cités:
- EP-A2- 1 918 307
- MYRIAM PIRE ET AL: "Imidazole-promoted acceleration of crosslinking in epoxidized natural rubber/dicarboxylic acid blends", POLYMER, ELSEVIER SCIENCE PUBLISHERS B.V, GB , vol. 52, no. 23 27 octobre 2011 (2011-10-27), pages 5243-5249, XP002698721, ISSN: 0032-3861, DOI: 10.1016/J.POLYMER.2011.09.032 Extrait de l'Internet: URL:http://www.sciencedirect.com/science/a rticle/pii/S0032386111007853 [extrait le 2011-09-22]
- WUNPEN CHONKAEW ET AL: "Mechanical and tribological properties of epoxy modified by liquid carboxyl terminated poly(butadiene-co-acrylonitrile) rubber", JOURNAL OF APPLIED POLYMER SCIENCE, WILEY, US, vol. 125, no. 1, 5 juillet 2012 (2012-07-05), pages 361-369, XP002699193, ISSN: 0021-8995, DOI: 10.1002/APP.35580 [extrait le 2011-12-19]
- MYRIAM PIRE ET AL: "Epoxydized natural rubber/dicarboxylic acid self-vulcanized blends", POLYMER, ELSEVIER SCIENCE PUBLISHERS B.V, GB, vol. 51, no. 25, 26 novembre 2010 (2010-11-26), pages 5903-5909, XP002698722, ISSN: 0032-3861, DOI: 10.1016/J.POLYMER.2010.10.023 [extrait le 2010-10-20]

## Description

La présente invention est relative aux pneumatiques munis de compositions de caoutchouc, en particulier de compositions de caoutchouc à base d'élastomères oléfiniques comportant des fonctions époxydes.

Il est un objectif constant pour les industriels du pneumatique de trouver des solutions afin d'améliorer l'endurance des pneumatiques, en effet, il est souhaitable de produire des mélanges de caoutchouc possédant des propriétés stables dans le temps et ce malgré la répétition des sollicitations mécaniques et thermiques durant la vie du pneumatique. En particulier, il est important pour les compositions des divers produits semi-finis entrant dans la composition de pneumatiques, tels que par exemple des bandes de roulement, de présenter un bonne résistance à la thermo-oxydation qui, à l'usage du pneumatique peut modifier ses performances.

Idéalement, par exemple, une bande de roulement de pneumatique doit obéir à un grand nombre d'exigences techniques, souvent antinomiques, parmi lesquelles une résistance élevée à l'usure tout en offrant au pneumatique une faible résistance au roulement et une adhérence élevée tant sur sol sec que sur sol mouillé, enneigé ou verglacé.

Par ailleurs, il est connu, et habituel depuis de très nombreuses années, d'utiliser dans des pneumatiques des compositions de caoutchouc dont la matrice élastomérique est réticulée au soufre, cette réticulation est alors nommée vulcanisation. Le système de vulcanisation classique combine du soufre et au moins un accélérateur de vulcanisation. Les systèmes de vulcanisation ont été perfectionnés au fil des années, en association avec les procédés de préparation des compositions de caoutchouc. Ainsi, les compositions sont souvent complexes et comprennent en plus du soufre, ou d'un agent donneur de soufre, des accélérateurs de vulcanisation, des activateurs, et éventuellement des retardateurs de vulcanisation.

Ces systèmes de vulcanisation très complexes ne sont réellement efficaces que pour des matrices polymère riches en insaturations, ce qui n'est pas le cas pour des polymères dont les chaines sont majoritairement oléfiniques. A présent, il serait intéressant pour les manufacturiers de trouver des systèmes de réticulation aussi performants que la vulcanisation, tout en simplifiant les compositions et leur préparation, et mieux adaptés à la réticulation de polymères majoritairement oléfiniques.

Poursuivant leurs recherches, les demanderesses ont à présent trouvé que des compositions pour pneumatiques particulières pouvaient être préparées de manière simplifiée par rapport aux compositions à base d'élastomères diéniques classiquement vulcanisées, et que ces compositions pouvaient présenter des améliorations de la rigidité.

En conséquence, un premier objet de l'invention concerne un pneumatique comportant une composition de caoutchouc à base d'au moins un élastomère oléfinique comprenant des fonctions époxydes comme élastomère majoritaire, au moins une charge renforçante, et un système de réticulation comprenant un poly-acide carboxylique de formule générale (I) 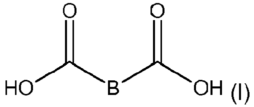 dans laquelle B représente un groupement hydrocarboné comportant au moins 50 atomes de carbone, éventuellement substitué et éventuellement interrompu par un ou plusieurs hétéroatomes, et un imidazole de formule générale (II) 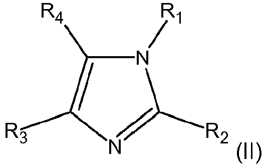 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

Préférentiellement, l'invention a pour objet un pneumatique tel que défini ci-dessus dans lequel B représente un groupement divalent hydrocarboné comportant de 50 à 1800 atomes de carbone. Plus préférentiellement, B représente un groupement divalent hydrocarboné comportant de 50 à 1000 atomes de carbone. Encore plus préférentiellement, B représente un groupement divalent hydrocarboné comportant de 80 à 500 atomes de carbone. De manière très préférentielle, B représente un groupement divalent hydrocarboné comportant de 100 à 300 atomes de carbone.

De préférence, l'invention a pour objet un pneumatique tel que défini ci-dessus dans lequel B est un groupement divalent de type aliphatique, ou aromatique ou un groupement comportant au moins une partie aliphatique et une partie aromatique. Préférentiellement, B est un groupement divalent de type aliphatique, ou un groupement comportant au moins une partie aliphatique et une partie aromatique. Plus préférentiellement, B est un groupement divalent de type aliphatique saturé ou insaturé. Très préférentiellement, B est un groupement alkylène.

Préférentiellement, l'invention a pour objet un pneumatique tel que défini ci-dessus dans lequel B est interrompu par au moins un hétéroatome choisi parmi l'oxygène, l'azote et le soufre, de préférence l'oxygène.

Préférentiellement également, l'invention a pour objet un pneumatique tel que défini ci-dessus dans lequel B est substitué par au moins un radical choisi parmi les radicaux alkyle, cycloalkylalkyle, aryle, aralkyle, hydroxyle, alkoxy, amino et carbonyle. Plus préférentiellement, B est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques. Aternativement et plus préférentiellement également, B ne comporte pas d'autre fonction acide carboxylique.

Préférentiellement, l'invention a pour objet un pneumatique tel que défini ci-dessus, dans lequel le taux de poly-acide est compris dans un domaine allant de 2 à 100 pce, de préférence de 2 à 50 pce. Plus préférentiellement, le taux de poly-acide est compris dans un domaine allant de 5 à 50 pce, de préférence de 5 à 30 pce.

De préférence, l'invention a pour objet un pneumatique tel que défini ci-dessus dans lequel,
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

De préférence, l'invention a pour objet un pneumatique tel que défini ci-dessus dans lequel R1 représente un groupement choisi parmi les groupements alkyles ayant de 2 à 12 atomes de carbone, ou aralkyles ayant de 7 à 13 atomes de carbone; groupements qui peuvent éventuellement être substitués.

De préférence également, l'invention a pour objet un pneumatique tel que défini ci-dessus dans lequel R1 représente un groupement aralkyle ayant de 7 à 13 atomes de carbone éventuellement substitué et R2 représente un groupement alkyle ayant de 1 à 12 atomes de carbone. Plus préférentiellement, R1 représente un groupement aralkyle ayant de 7 à 9 atomes de carbone éventuellement substitué et R2 représente un groupement alkyle ayant de 1 à 4 atomes de carbone.

De manière préférentielle, l'invention a pour objet un pneumatique tel que défini ci-dessus dans lequel R3 et R4 représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

De manière préférentielle également, l'invention a pour objet un pneumatique tel que défini ci-dessus dans lequel R3 et R4 forment avec les atomes de carbone du cycle imidazole auxquels ils se rattachent, un cycle phényle, cyclohexene, ou cyclopentene.

Préférentiellement, l'invention a pour objet un pneumatique tel que défini ci-dessus dans lequel le taux d'imidazole est compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I). Plus préférentiellement, le taux d'imidazole est compris dans un domaine allant de 0,5 à 2,5 équivalents molaires, et de préférence de 0,5 à 2 équivalents molaires, et de manière encore plus préférentielle de 0,5 à 1,5 équivalents molaires par rapport aux fonctions acides carboxyliques présentes sur le poly-acide carboxylique de formule générale (I).

De préférence, l'invention a pour objet un pneumatique tel que défini ci-dessus dans lequel l'élastomère oléfinique comprenant des fonctions époxydes comprend entre 50 et 95% (pourcentage molaire), plus préférentiellement entre 65 et 85% d'oléfine (pourcentage molaire).

De préférence également, l'invention a pour objet un pneumatique tel que défini ci-dessus dans lequel l'élastomère oléfinique comprenant des fonctions époxydes est un élastomère éthylénique époxydé.

Préférentiellement, l'invention a pour objet un pneumatique tel que défini ci-dessus dans lequel l'élastomère oléfinique comprenant des fonctions époxydes, représente de 30 à 100 pce, préférentiellement de 50 à 100 pce, en coupage avec 0 à 70 pce, de préférence de 0 à 50 pce, d'un ou plusieurs élastomères non époxydés minoritaires. Plus préférentiellement, l'élastomère oléfinique comprenant des fonctions époxydes, représente la totalité des 100 pce d'élastomère.

De préférence, l'invention a pour objet un pneumatique tel que défini ci-dessus dans lequel la charge renforçante comporte du noir de carbone, de la silice ou un mélange de noir de carbone et de silice. Préférentiellement, l'invention a pour objet un pneumatique tel que défini ci-dessus dans lequel le taux de charge renforçante est comprise entre 20 et 200 pce.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### 1. Tests

Les compositions de caoutchouc sont caractérisées après cuisson par leurs propriétés mécaniques et dynamiques ; elles sont aussi caractérisées par leurs caractéristiques de réticulation, comme indiqué ci-après.

### I.1. Propriétés mécaniques : Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en seconde élongation (i.e., après un cycle d'accommodation au taux d'extension prévu pour la mesure elle-même) le module sécant nominal (ou contrainte apparente, en MPa) à 10% ou 50% d'allongement (notés respectivement MSA10 ou MSA50). Les mesures de traction pour déterminer les modules accommodés sécants sont effectuées à la température de 23°C +/-2°C, et dans les conditions normales d'hygrométrie (50 +/- 5% d'humidité relative). Ces valeurs sont représentatives de la rigidité: plus la valeur des modules est élevée, plus la rigidité est élevée.

### I.2. Propriétés dynamiques

Les propriétés dynamiques G*et tan(δ)max sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max. Cette valeur est représentative de l'hystérèse du matériau et dans le cas présent de la résistance au roulement : plus la valeur de tan(δ)max est faible, plus la résistance au roulement est basse. Les valeurs de G* mesurées à 23°C sont représentatives de la rigidité, c'est-à-dire de la résistance à la déformation: plus la valeur de G* est élevée plus la rigidité du matériau est importante, et donc la résistance à l'usure élevée.

### I.3. Caractéristiques de réticulation : Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de réticulation. Les mesures sont traitées selon la norme DIN 53529 - partie 2 (mars 1983) :
- ti est le délai d'induction, c'est-à-dire le temps nécessaire au début de la réaction de réticulation.
- talpha (par exemple t90,) est le temps nécessaire pour atteindre une conversion de alpha%, c'est-à-dire alpha% (par exemple 90%) de l'écart entre les couples minimum et maximum.
- couple max atteint : valeur mesurée en dN.m du couple maximal atteint pour la composition au cours de l'essai, correspondant à l'optimum de réticulation dans les conditions du test.

### I.4. Caractéristiques de thermo-oxydation : test de résistance à la thermo-oxydation

Après cuisson, des blocs de caoutchouc correspondant aux compositions pour lesquelles les propriétés de résistance à la thermo-oxydation sont à évaluer, sont vieillis dans une étuve à une température de 85°C sous une humidité relative de 50% pendant 4 semaines.

Les propriétés mécaniques et dynamiques décrites ci-dessus peuvent alors être réévaluées. Les nouvelles valeurs obtenues peuvent être exprimées en base 100 par rapport à la valeur initiale avant vieillissement pour chaque composition, la résistance à la thermo-oxydation étant d'autant plus importante que la valeur obtenue est proche de 100.

### II. Composition des pneumatiques de l'invention

Le pneumatique selon l'invention comporte une composition de caoutchouc à base d'au moins un élastomère oléfinique comprenant des fonctions époxydes comme élastomère majoritaire, au moins une charge renforçante, et un système de réticulation comprenant un poly-acide carboxylique de formule générale (I) et un imidazole de formule générale (II).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression "équivalent molaire", bien connue de l'homme du métier, il faut entendre le quotient entre le nombre de moles du composé concerné et le nombre de moles du composé de référence. Ainsi, 2 équivalents d'un composé B par rapport à un composé A représentent 2 moles du composé B lorsqu'1 mole du composé A est utilisée.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1. Elastomère oléfinique comprenant des fonctions époxydes (ou élastomère oléfinique époxydé)

Par élastomère ou caoutchouc (les deux termes étant de manière connue synonymes et interchangeables) du type oléfinique époxydé, on rappelle que doit être entendu un élastomère fonctionnalisé époxyde, c'est-à-dire qu'il est porteur de groupes fonctionnels époxydes, et dont la chaine élastomérique est une chaine carbonée comportant majoritairement des unités monomériques oléfine notés O (taux molaire supérieur à 50%). Plus précisément, le taux molaire de O est compris entre 50 et 95%, préférentiellement entre 65 et 85% Cet élastomère oléfinique est donc un copolymère comportant également 5 à 50% molaire de motifs non oléfiniques, c'est-à-dire différents de O). Ces motifs non oléfiniques sont constitués en partie ou en totalité par des motifs porteurs des groupes fonctionnels époxydes, notés R, nécessaires aux besoins de l'invention. Dans le cas où les motifs non oléfiniques ne sont pas intégralement des motifs R, d'autres motifs, notés A sont présents dans la chaine carbonée de telle manière que le taux molaire de R+A est strictement inférieur à 50%.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique époxydé est un élastomère éthylénique époxydé, ce qui permet d'améliorer encore plus le compromis entre les performances de rigidité et d'hystérèse dans les compositions pour pneumatique.

Une caractéristique essentielle de l'élastomère oléfinique époxydé utile aux besoins de l'invention, est qu'il est fonctionnalisé, porteur de groupes fonctionnels époxydes.

La fonction époxyde peut être portée directement par le squelette carboné, et est alors principalement obtenue par époxydation de doubles liaisons carbone-carbone initialement présentes après copolymérisation. Cette époxydation de polymères insaturés est bien connue de l'homme du métier, et peut se faire par exemple par des procédés à base de chlorohydrine ou de bromohydrine, des procédés d'oxydation directe ou des procédés à base de peroxydes d'hydrogène, d'alkyl hydropéroxydes ou de peracides (tels que l'acide peracétique ou acide performique).

La fonction époxyde peut également être pendante et est alors soit déjà présente dans un monomère intervenant dans la copolymérisation avec l'oléfine (ce monomère peut être, par exemple, le méthacrylate de glycidyle, l'allylglycidyléther ou le vinylglycidyléther), soit obtenue par la modification post-copolymérisation d'une fonction pendante.

Le taux (% molaire) de motif R des élastomères oléfiniques époxydés précédemment décrits peut varier dans une large part selon les modes de réalisation particuliers de l'invention, de préférence dans un domaine de 0,1% à 50%, préférentiellement dans un domaine de 2% à 50%, plus préférentiellement dans un domaine de 2% à 20%. Quand le taux de motifs R est inférieur à 0,1%, l'effet technique visé risque d'être insuffisant tandis qu'au-delà de 50%, l'élastomère ne serait plus majoritairement oléfinique.

Lorsque les motifs non oléfiniques ne sont pas constitués en totalité par des motifs R porteurs de fonction époxyde, d'autres motifs non oléfiniques A sont présents dans la chaine, de façon à ce que le taux molaire total représenté par les monomères O, R et A soit égal à 100%. Les monomères non oléfiniques utiles à la préparation des élastomères oléfiniques époxydés peuvent être choisis parmi les monomères non oléfiniques ne conduisant pas à des insaturations et les monomères qui une fois polymérisés conduisent à des insaturations dans la chaine élastomère tels que des monomères diéniques.

Les monomères non oléfiniques ne conduisant pas à des insaturations sont essentiellement des monomères vinyliques et acryliques/métacryliques. Par exemple, de tels monomères peuvent être choisis parmi le styrène, le vinyle acétate, l'alcool vinylique, l'acrylonitrile, l'acrylate de méthyle, le métacrylate de méthyle, ces monomères étant éventuellement substitués par des groupes alkyles, aryles ou d'autres groupes fonctionnalisés.

Par exemple également, les monomères diéniques utiles à la préparation des élastomères de type oléfiniques par copolymérisation sont tous ceux connus de l'homme de l'art pour former des élastomères insaturés, tels que ceux choisis parmi l'isoprène, le butadiène, le 1,3-pentadiène, et le 2,4-hexadiène ces monomères étant éventuellement substitués.

Les élastomères oléfiniques époxydés précédemment décrits sont de manière connue solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

Les élastomères oléfiniques époxydés présentent une Tg dans la très grande majorité des cas qui est négative (c'est-à-dire inférieure à 0°C). La Tg des élastomères décrits ci-dessus est mesurée de manière connue par DSC (Differential Scanning Calorimetry), par exemple et sauf indications différentes spécifiées dans la présente demande, selon la norme ASTM D3418 de 1999.

Les élastomères oléfiniques époxydés présentent une masse molaire moyenne en nombre (Mn) d'au moins 20 000 g/mol et d'au plus 1 500 000 g/mol. L'indice de polydispersité Ip, égal à Mw/Mn (Mw étant la masse molaire moyenne en poids), est compris entre 1,05 et 9,00.

De préférence, et en résumé, l'élastomère oléfinique comprenant des fonctions époxydes est donc un copolymère possédant au moins 50% (en moles) d'unités monomériques oléfine, et avec un nombre d'unités monomériques différentes supérieur ou égal à 2, préférentiellement de 2 à 5, et plus préférentiellement de 2 ou 3. Ce copolymère pourra être obtenu par copolymérisation ou par modification post-polymérisation d'un élastomère. Les fonctions époxydes présentes dans le copolymère oléfinique, obtenu par copolymérisation ou par modification post-polymérisation, seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

Des élastomères oléfiniques époxydés et leurs procédés d'obtention sont bien connus de l'homme du métier et disponibles commercialement. Des élastomères oléfiniques porteurs de groupes époxydes ont été décrits par exemple dans les documents EP 0247580 ou US 5576080. Egalement, la société Arkema propose dans le commerce, des polyéthylènes époxydés sous les dénominations commerciales « Lotader AX8840» et « Lotader AX8900 ».

Les compositions des pneumatiques de l'invention peuvent contenir un seul élastomère oléfinique époxydé ou un mélange de plusieurs élastomères oléfiniques époxydés (qu'on notera alors au singulier comme étant « l'élastomère oléfinique époxydé » pour représenter la somme des élastomères époxydés de la composition), l'élastomère oléfinique époxydé pouvant être utilisé en association avec tout type d'élastomère non époxydé, par exemple diénique, voire avec des élastomères autres que des élastomères diéniques.

L'élastomère oléfinique époxydé est majoritaire dans la composition de caoutchouc du pneumatique de l'invention, c'est-à-dire qu'il est soit le seul élastomère, soit il est celui qui représente la plus grande masse, parmi les élastomères de la composition.

Selon un mode préférentiel de réalisation de l'invention, la composition de caoutchouc comprend par exemple de 30 à 100 pce, en particulier de 50 à 100 pce, de préférence 70 à 100 pce, d'élastomère oléfinique époxydé majoritaire en coupage avec 0 à 70 pce, en particulier de 0 à 50 pce et de préférence 0 à 30 pce, d'un ou plusieurs autres élastomères minoritaires.

Selon un autre mode préférentiel de réalisation de l'invention, la composition comporte pour la totalité des 100 pce d'élastomère, un ou plusieurs élastomères oléfiniques époxydés.

### II.2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire éventuel, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce).

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Le couplage entre la charge inorganique et l'élastomère oléfinique peut être en partie assuré par les interactions de nature chimique et/ou physique existant entre les deux espèces.

Néanmoins, pour exacerber le couplage entre la charge inorganique renforçante et l'élastomère, on peut utiliser de manière connue un agent de couplage (ou agent de liaison) par exemple bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Dans les compositions de caoutchouc conformes à l'invention, la teneur en agent de couplage est préférentiellement de 0 à 12 pce, plus préférentiellement entre 0 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3. Système de réticulation

A l'élastomère oléfinique époxydé et à la charge renforçante précédemment décrits est associé un système de réticulation, apte à la réticuler ou durcir la composition du pneumatique selon l'invention. Ce système de réticulation comprend un (c'est-à-dire au moins un) poly-acide carboxylique de formule générale (I) et un (c'est-à-dire au moins un) imidazole de formule générale (II).

### II.3.a. Poly-acide

Le poly-acide utile pour les besoins de l'invention est un poly-acide carboxylique de formule générale (I) 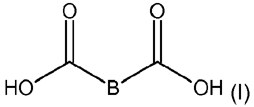 dans laquelle B représente un groupement hydrocarboné comportant au moins 50 atomes de carbone, éventuellement substitué et éventuellement interrompu par un ou plusieurs hétéroatomes.

De préférence dans le poly-acide de formule générale (I), B représente un groupement divalent hydrocarboné comportant de 50 à 1800 atomes de carbone, préférentiellement de 50 à 1000 atomes de carbone, plus préférentiellement de 80 à 500 atomes de carbone, et de manière très préférentielle de 100 à 300 atomes de carbone. Au-dessus de 1800 atomes de carbone, le poly-acide est un agent de réticulation moins performant. En dessous de 50 atomes de carbone, l'hystérèse des compositions n'est pas autant améliorée pour les compositions comprenant les poly-acides.

Préférentiellement dans le poly-acide de formule générale (I), B peut être un groupement divalent de type aliphatique, ou aromatique ou un groupement comportant au moins une partie aliphatique et une partie aromatique. De préférence, B peut être un groupement divalent de type aliphatique, ou un groupement comportant au moins une partie aliphatique et une partie aromatique. Alternativement, et de préférence également, B peut être un groupement divalent de type aliphatique saturé ou insaturé, par exemple un groupement alkylène.

Le groupement B du poly-acide de formule générale (I) peut être interrompu par au moins un hétéroatome choisi parmi l'oxygène, l'azote et le soufre, de préférence l'oxygène.

Egalement, le groupement B du poly-acide de formule générale (I) peut être substitué par au moins un radical choisi parmi les radicaux alkyle, cycloalkylalkyle, aryle, aralkyle, hydroxyle, alkoxy, amino et carbonyle.

Le poly-acide de formule générale (I) peut comporter plus de deux fonctions acides carboxyliques, dans ce cas, le groupement B est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

Selon un mode préférentiel, le radical B ne comporte pas d'autre fonction acide carboxylique, le poly-acide est donc un diacide.

Le taux de poly-acide est préférentiellement compris dans un domaine allant de 2 à 100 pce, de préférence de 2 à 50 pce, plus préférentiellement de 5 à 50 pce, et plus préférentiellement encore de 5 à 30 pce. En dessous de 2 pce de poly-acide, l'effet de la réticulation n'est pas sensible tandis qu'au-delà de 100 pce de poly-acide, le poly-acide, agent de réticulation, devient majoritaire en poids par rapport à la matrice élastomérique.

Les poly-acides utiles pour les besoin de l'invention sont soit disponibles dans le commerce, soit facilement préparés par l'homme de l'art selon des techniques bien connues telles que décrites par exemple dans le document EP1072613 ainsi que dans les références que ce document cite.

Par exemple, à titre de poly-acides disponibles dans le commerce et utiles aux besoins de l'invention, on peut citer :
- Polybutadiene, terminé dicarboxy (Aldrich, CAS 68891-79-2)
- Poly(acrylonitrile-co-butadiene), terminé dicarboxy (Aldrich, CAS 68891-46-3)
- Poly(ethylene oxide), 4-bras, terminé acide carboxylique (Aldrich)
- Poly(ethylene glycol) bis(carboxymethyl) ether (Aldrich, CAS 39927-08-7)
- Polybutadiène, terminé dicarboxy (Sartomer, « Krasol LBM32 »).

### II.3.b. Imidazole

L'imidazole utile au système de réticulation du pneumatique de l'invention est un imidazole de formule générale (II) 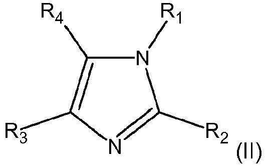 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

De préférence, l'imidazole de formule générale (II) possèdent des groupements tels que :
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, R1 représente un groupement choisis parmi les groupements alkyles ayant de 2 à 12 atomes de carbone, ou aralkyles ayant de 7 à 13 atomes de carbone; groupements qui peuvent éventuellement être substitués. Plus préférentiellement, R1 représente un groupement aralkyle ayant de 7 à 13 atomes de carbone éventuellement substitué et R2 représente un groupement alkyle ayant de 1 à 12 atomes de carbone. Encore plus préférentiellement, R1 représente un groupement aralkyle ayant de 7 à 9 atomes de carbone éventuellement substitué et R2 représente un groupement alkyle ayant de 1 à 4 atomes de carbone.

De préférence, R3 et R4 représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Alternativement et préférentiellement également, R3 et R4 représentent forment avec les atomes de carbone du cycle imidazole auxquels ils se rattachent, un cycle phényle, cyclohexene, ou cyclopentene.

Pour un bon fonctionnement de l'invention, le taux d'imidazole est préférentiellement compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I). En dessous de 0,5 équivalents molaires, on n'observe pas d'effet du coagent imidazole par rapport à la situation où le poly-acide est utilisé seul tandis qu'au-dessus d'une valeur de 4 équivalents molaires, on n'observe pas de bénéfice supplémentaire par rapport à des taux plus faibles. Ainsi, le taux d'imidazole est plus préférentiellement compris dans un domaine allant de 0,5 à 2,5 équivalents molaires, et de préférence de 0,5 à 2 équivalents molaires, et de manière encore plus préférentielle de 0,5 à 1,5 équivalents molaires par rapport aux fonctions acides carboxyliques présentes sur le poly-acide carboxylique de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

### II.3.c. Poly-acide et imidazole

A l'évidence, et conformément à la définition de l'expression « à base de » pour la présente invention, une composition à base du poly-acide de formule générale (I) et de l'imidazole de formule générale (II) présentés ci-dessus pourrait être une composition dans laquelle ledit poly-acide et ledit imidazole auraient préalablement réagi ensemble pour former un sel entre une ou plusieurs fonctions acides du poly-acide et respectivement un ou plusieurs noyaux imidazoles.

### II.4. Additifs divers

Les compositions de caoutchouc des pneumatiques conformes à l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

De manière préférentielle, les compositions des pneumatiques de l'invention sont dépourvues de système de réticulation autre que celui décrit précédemment, et qui comporte au moins un poly-acide et au moins un imidazole. Dit autrement, le système de réticulation à base d'au moins un poly-acide et au moins un imidazole est préférentiellement le seul système de réticulation dans la composition du pneumatique de l'invention. De préférence, les compositions des pneumatiques de l'invention sont dépourvues de système de vulcanisation, ou en contiennent moins de 1 pce, de préférence moins de 0,5 pce et plus préférentiellement moins de 0,2 pce. Ainsi, la composition du pneumatique selon l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

### II.5. Préparation des compositions de caoutchouc

Les compositions utilisées dans les pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 100°C et 190°C, de préférence entre 120°C et 180°C, suivie d'une seconde phase de travail mécanique (phase dite "productive") jusqu'à une plus basse température, typiquement inférieure à 100°C, par exemple entre 40°C et 100°C, phase de finition au cours de laquelle peut être incorporé le système de réticulation. L'homme de l'art saura ajuster la température dans les mélangeurs en fonction de la nature des élastomères oléfiniques époxydés.

Selon les cas, pour la mise en oeuvre de l'invention, le système réticulant est soit introduit au mélangeur interne avec tous les autres constituants de la composition, soit introduit lors de la phase productive décrite précédemment.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication du pneumatique de l'invention.

### II.6. Pneumatique de l'invention

La composition de caoutchouc du pneumatique selon l'invention peut être utilisée dans différentes parties dudit pneumatique, notamment dans le sommet, la zone du bourrelet, la zone du flanc et la bande de roulement (notamment dans la sous-couche de la bande de roulement).

Selon un mode préférentiel de réalisation de l'invention, la composition de caoutchouc précédemment décrite peut être utilisée dans le pneumatique comme une couche élastomère dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Egalement, la composition selon l'invention peut être utilisée dans les nappes du sommet (ceinture de pneumatique) ou dans la zone entre les extrémités des nappes du sommet et la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### III. EXEMPLES DE REALISATION DE L'INVENTION

### III.1. Préparation des compositions

On procède pour les essais qui suivent de la manière suivante : on introduit dans un mélangeur interne (taux de remplissage final : environ 70% en volume), dont la température initiale de cuve est d'environ 80 °C, successivement l'élastomère oléfinique époxydé, la charge renforçante, le poly-acide, l'imidazole et les autres additifs. On conduit alors un travail thermomécanique (phase non-productive) en une étape, qui dure au total environ 2 à 4 min, jusqu'à atteindre une température maximale de « tombée » allant de 135°C à 165°C selon les compositions. L'introduction du système de vulcanisation soufré classique présent dans certaines compositions non conformes à l'invention est effectuée lors d'une seconde phase de travail mécanique à 80°C.

On récupère le mélange ainsi obtenu, on le refroidit puis les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### 111.2. Exemple 1

Cet essai illustre également des compositions de caoutchouc qui peuvent être utilisées en particulier en bande roulement du pneumatique de l'invention. Ces compositions présentent une facilité de préparation et une simplicité supérieure à une composition de caoutchouc conventionnelle (vulcanisée au soufre), tout en améliorant également l'hystérèse des compositions par rapport aux compositions vulcanisées au soufre.

Pour cela, des compositions de caoutchouc ont été préparées comme indiqué précédemment, dont certaines conformes à l'invention (C3) et certaines non conformes (témoins C1 à C2) comme indiqué au tableau 1.

**Tableau 3**

| | **C1** | **C2** | **C3** |
|---|---|---|---|
| ENR25 (1) | 100 | 100 | |
| PEEPOX (2) | | | 100 |
| Silice (3) | 45 | 45 | 60 |
| Silane (4) | 4,5 | 4,5 | - |
| 6PPD (5) | 3 | 3 | - |
| Poly-acide (6) | | 14,34 | 24,8 |
| Imidazole (7) | | 1,7 | 2,7 |
| Soufre | 1,3 | | - |
| Accélérateur (8 | 1,56 | | - |
| ZnO (9) | 2,7 | | - |
| Acide stéarique (10) | 2,5 | | - |

| | | | |
|---|---|---|---|
| (1) Caoutchouc Naturel Epoxydé, « ENR25 », de la société Guthrie Polymer ; (2) PEEPOX: polyéthylène époxydé « Lotader AX8900 », de la société Arkema comprenant 8% de méthacrylate de glycidyle, 24% d'acrylate de méthyle et 68% d'éthylène ; (3) Silice 160 MP, « Zeosil 1165MP » de la société Rhodia ; (4) « Dynasilan Octeo », de la société Degussa ; (5) N-1,3-diméthylbutyl-N-phénylparaphénylènediamine (Santoflex 6-PPD de la société Flexsys) ; (6) Polybutadiène, terminé dicarboxy « CT3000 » de la société Cray Valley, de masse molaire 3000 g/mol ; (7) 1-benzyl-2-méthylimidazole, CAS = 13750-62-4 de la société Sigma-Aldrich ; (8) N-cyclohexyl-2-benzothiazyle sulfénamide (Santocure CBS de la société Flexsys) ; (9) Oxyde de zinc (grade industriel - société Umicore) ; (10) Stéarine (« Pristerene 4931 » de la société Uniqema). | | | |

Les compositions C1 et C2 sont des compositions à base d'un élastomère porteur de fonctions époxydes mais majoritairement diénique, réticulées au soufre (conventionnel pour la cuisson des pneumatiques) ou avec le système de réticulation poly-acide/ imidazole mis en avant dans l'invention, tandis que la composition C3 est à base d'une matrice oléfinique époxydée réticulée par un poly-acide et un imidazole, selon l'invention.

Les propriétés des compositions C1 à C3 ont été mesurées comme indiqué précédemment et les résultats sont indiqués dans le tableau 2.

On note dans la composition de l'invention une plus grande simplicité du mélange, avec moins d'ingrédients que dans les compositions témoins vulcanisées. Par ailleurs, on peut noter que le remplacement système de vulcanisation classique par un système de réticulation poly-acide et imidazole conduit à une amélioration de l'hystérèse du mélange, accompagné d'une légère rigidification. Cette diminution d'hystérèse, accompagnée d'un gain en rigidité, est exacerbée dans le cas du remplacement de la matrice diénique époxydée par une matrice polyoléfinique époxydée, réticulée selon l'invention.

**Tableau 4**

| | ***C1*** | ***C2*** | ***C3*** |
|---|---|---|---|
| *MSA50 (MPa)* | 2,24 | 2,30 | 6,07 |
| *G* (MPa) à 23°C, 10Hz, 10%* | 2,0 | 2,2 | 2,9 |
| *tandₘₐₓ 23°C retour* | 0,224 | 0,180 | 0,10 |

## Revendications

1. Pneumatique comportant une composition de caoutchouc à base d'au moins un élastomère oléfinique comprenant des fonctions époxydes comme élastomère majoritaire, au moins une charge renforçante, et un système de réticulation comprenant un poly-acide carboxylique de formule générale (I) 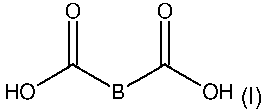 dans laquelle B représente un groupement hydrocarboné comportant au moins 50 atomes de carbone, éventuellement substitué et éventuellement interrompu par un ou plusieurs hétéroatomes,
et un imidazole de formule générale (II) 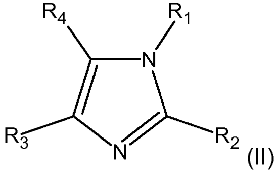 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble, avec les atomes de carbone du cycle imidazole auxquels ils se rattachent, un cycle.

2. Pneumatique comportant une composition de caoutchouc selon la revendication 1 dans lequel B représente un groupement divalent hydrocarboné comportant de 50 à 1800 atomes de carbone.

3. Pneumatique comportant une composition de caoutchouc selon l'une quelconque des revendications 1 à 2 dans lequel B est un groupement divalent de type aliphatique, ou aromatique ou un groupement comportant au moins une partie aliphatique et une partie aromatique.

4. Pneumatique comportant une composition de caoutchouc selon l'une quelconque des revendications 1 à 3 dans lequel B est un groupement divalent de type aliphatique saturé ou insaturé.

5. Pneumatique comportant une composition de caoutchouc selon l'une quelconque des revendications 1 à 4 dans lequel B est un groupement alkylène.

6. Pneumatique comportant une composition de caoutchouc selon l'une quelconque des revendications 1 à 5 dans lequel B est interrompu par au moins un hétéroatome choisi parmi l'oxygène, l'azote et le soufre, de préférence l'oxygène.

7. Pneumatique comportant une composition de caoutchouc selon l'une quelconque des revendications 1 à 6 dans lequel B est substitué par au moins un radical choisi parmi les radicaux alkyle, cycloalkylalkyle, aryle, aralkyle, hydroxyle, alkoxy, amino et carbonyle.

8. Pneumatique comportant une composition selon l'une quelconque des revendications 1 à 7, dans lequel B est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

9. Pneumatique comportant une composition selon l'une quelconque des revendications 1 à 7, dans lequel le radical B ne comporte pas d'autre fonction acide carboxylique.

10. Pneumatique comportant une composition de caoutchouc selon l'une quelconque des revendications précédentes, dans lequel le taux de poly-acide est compris dans un domaine allant de 2 à 100 pce, de préférence de 2 à 50 pce.

11. Pneumatique comportant une composition de caoutchouc selon l'une quelconque des revendications précédentes, dans lequel,
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

12. Pneumatique comportant une composition de caoutchouc selon l'une quelconque des revendications précédentes, dans lequel le taux d'imidazole est compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I).

13. Pneumatique comportant une composition de caoutchouc selon l'une quelconque des revendications précédentes, dans lequel l'élastomère oléfinique comprenant des fonctions époxydes comprend entre 50 et 95%, plus préférentiellement entre 65 et 85% d'oléfine (pourcentages molaires)

14. Pneumatique comportant une composition de caoutchouc selon l'une quelconque des revendications précédentes, dans lequel l'élastomère oléfinique comprenant des fonctions époxydes est un élastomère éthylénique époxydé.

15. Pneumatique comportant une composition de caoutchouc selon l'une quelconque des revendications précédentes, dans lequel l'élastomère oléfinique comprenant des fonctions époxydes représente de 30 à 100 pce, préférentiellement de 50 à 100 pce, en coupage avec 0 à 70 pce, de préférence de 0 à 50 pce, d'un ou plusieurs élastomères non époxydés minoritaires.

## Patentansprüche

1. Reifen, umfassend eine Kautschukzusammensetzung auf Basis von mindestens einem olefinischen Elastomer mit Epoxidfunktionen als Hauptelastomer, mindestens einen verstärkenden Füllstoff und ein Vernetzungssystem, umfassend eine Polycarbonsäure der allgemeinen Formel (I) 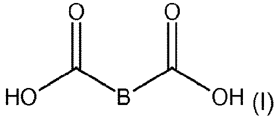 in der A für eine Kohlenwasserstoffgruppe mit mindestens 50 Kohlenstoffatomen, die gegebenenfalls substituiert und gegebenenfalls durch ein oder mehrere Heteroatome unterbrochen ist, steht,
und ein Imidazol der allgemeinen Formel (II) 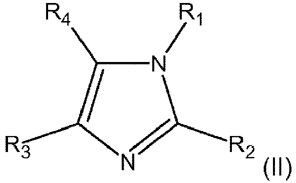 in der
- R₁ für eine Kohlenwasserstoffgruppe oder ein Wasserstoffatom steht,
- R₂ für eine Kohlenwasserstoffgruppe steht,
- R₃ und R₄ unabhängig voneinander für ein Wasserstoffatom oder eine Kohlenwasserstoffgruppe stehen,
- oder R₃ und R₄ auch zusammen mit den Kohlenstoffatomen des Imidazolrings, an den sie gebunden sind, einen Ring bilden.

2. Reifen, umfassend eine Kautschukzusammensetzung nach Anspruch 1, wobei B für eine zweiwertige Kohlenwasserstoffgruppe mit 50 bis 1800 Kohlenstoffatomen steht.

3. Reifen, umfassend eine Kautschukzusammensetzung nach einem der Ansprüche 1 bis 2, wobei B für eine zweiwertige Gruppe vom aliphatischen oder aromatischen Typ oder eine Gruppe mit mindestens einem aliphatischen Teil und einem aromatischen Teil steht.

4. Reifen, umfassend eine Kautschukzusammensetzung nach einem der Ansprüche 1 bis 3, wobei B für eine zweiwertige Gruppe vom gesättigten oder ungesättigten aliphatischen Typ steht.

5. Reifen, umfassend eine Kautschukzusammensetzung nach einem der Ansprüche 1 bis 4, wobei B für eine Alkylengruppe steht.

6. Reifen, umfassend eine Kautschukzusammensetzung nach einem der Ansprüche 1 bis 5, wobei B durch mindestens ein Heteroatom, das aus Sauerstoff, Stickstoff und Schwefel ausgewählt ist, vorzugsweise Sauerstoff, unterbrochen ist.

7. Reifen, umfassend eine Kautschukzusammensetzung nach einem der Ansprüche 1 bis 6, wobei B durch mindestens einen Rest, der aus Alkyl-, Cycloalkylalkyl-, Aryl-, Aralkyl-, Hydroxyl-, Alkoxy-, Amino- und Carbonylresten ausgewählt ist, substituiert ist.

8. Reifen, umfassend eine Zusammensetzung nach einem der Ansprüche 1 bis 7, wobei B durch eine oder mehrere Carbonsäurefunktionen und/oder durch einen oder mehrere Kohlenwasserstoffreste, die aus Alkyl-, Cycloalkyl-, Cycloalkylalkyl-, Aryl- und Aralkalkylresten, die ihrerseits durch eine oder mehrere Carbonsäurefunktionen substituiert sind, ausgewählt sind, substituiert ist.

9. Reifen, umfassend eine Zusammensetzung nach einem der Ansprüche 1 bis 7, wobei der Rest B keine weitere Carbonsäurefunktion umfasst.

10. Reifen, umfassend eine Kautschukzusammensetzung nach einem der vorhergehenden Ansprüche, wobei der Gehalt an Polysäure in einem Bereich von 2 bis 100 phe und vorzugsweise von 2 bis 50 phe liegt.

11. Reifen, umfassend eine Kautschukzusammensetzung nach einem der vorhergehenden Ansprüche, wobei
- R₁ für ein Wasserstoffatom oder eine Alkylgruppe mit 1 bis 20 Kohlenstoffatomen, eine Cycloalkylgruppe mit 5 bis 24 Kohlenstoffatomen, Arylgruppe mit 6 bis 30 Kohlenstoffatomen oder eine Aralkylgruppe mit 7 bis 25 Kohlenstoffatomen steht, wobei diese Gruppe gegebenenfalls durch ein oder mehrere Heteroatome unterbrochen und/oder substituiert sein kann,
- R₂ für eine Alkylgruppe mit 1 bis 20 Kohlenstoffatomen, eine Cycloalkylgruppe mit 5 bis 24 Kohlenstoffatomen, eine Arylgruppe mit 6 bis 30 Kohlenstoffatomen oder eine Aralkylgruppe mit 7 bis 25 Kohlenstoffatomen steht, wobei diese Gruppe gegebenenfalls durch ein oder mehrere Heteroatome unterbrochen und/oder substituiert sein kann,
- R₃ und R₄ unabhängig für gleiche oder verschiedene Gruppen stehen, die aus Wasserstoff oder Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt sind, wobei die Gruppen gegebenenfalls durch Heteroatome unterbrochen und/oder substituiert sein können, oder R₃ und R₄ auch zusammen mit den Kohlenstoffatomen des Imidazolrings, an den sie gebunden sind, einen Ring bilden, der aus aromatischen, heteroaromatischen oder aliphatischen Ringen mit 5 bis 12 Kohlenstoffatomen und vorzugsweise 5 oder 6 Kohlenstoffatomen ausgewählt ist.

12. Reifen, umfassend eine Kautschukzusammensetzung nach einem der vorhergehenden Ansprüche, wobei der Gehalt an Imidazol in einem Bereich von 0,5 bis 4 Moläquivalenten und vorzugsweise 0,5 bis 3 Moläquivalenten, bezogen auf die Carbonsäurefunktionen an der Polycarbonsäure der allgemeinen Formel (I), liegt.

13. Reifen, umfassend eine Kautschukzusammensetzung nach einem der vorhergehenden Ansprüche, wobei das olefinische Elastomer mit Epoxidfunktionen zwischen 50 und 95% und weiter bevorzugt zwischen 65 und 85% Olefin (Molprozentanteile) umfasst.

14. Reifen, umfassend eine Kautschukzusammensetzung nach einem der vorhergehenden Ansprüche, wobei das olefinische Elastomer mit Epoxidfunktionen ein epoxidiertes ethylenisches Elastomer ist.

15. Reifen, umfassend eine Kautschukzusammensetzung nach einem der vorhergehenden Ansprüche, wobei das olefinische Elastomer mit Epoxidfunktionen 30 bis 100 phe, vorzugsweise 50 bis 100 phe, als Verschnitt mit 0 bis 70 phe, vorzugsweise 0 bis 50 phe, eines oder mehrerer nicht epoxidierter Nebenelastomere ausmacht.

## Claims

1. Tyre comprising a rubber composition based on at least one olefinic elastomer comprising epoxide functional groups as predominant elastomer, at least one reinforcing filler and a crosslinking system comprising a polycarboxylic acid of general formula (I): 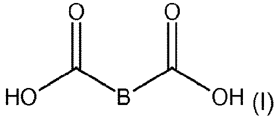 in which B represents a hydrocarbon group which comprises at least 50 carbon atoms, which is optionally substituted and which is optionally interrupted by one or more heteroatoms,
and an imidazole of general formula (II): 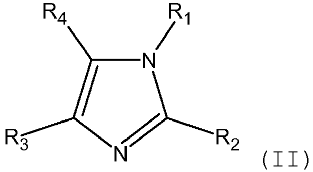 in which:
- R₁ represents a hydrocarbon group or a hydrogen atom,
- R₂ represents a hydrocarbon group,
- R₃ and R₄ represent, independently of one another, a hydrogen atom or a hydrocarbon group,
- or else R₃ and R₄ form, together with the carbon atoms of the imidazole ring to which they are attached, a ring.

2. Tyre comprising a rubber composition according to Claim 1, in which B represents a divalent hydrocarbon group comprising from 50 to 1800 carbon atoms.

3. Tyre comprising a rubber composition according to either one of Claims 1 and 2, in which B is a divalent group of aliphatic or aromatic type or a group comprising at least an aliphatic portion and an aromatic portion.

4. Tyre comprising a rubber composition according to any one of Claims 1 to 3, in which B is a divalent group of saturated or unsaturated aliphatic type.

5. Tyre comprising a rubber composition according to any one of Claims 1 to 4, in which B is an alkylene group.

6. Tyre comprising a rubber composition according to any one of Claims 1 to 5, in which B is interrupted by at least one heteroatom chosen from oxygen, nitrogen and sulphur, preferably oxygen.

7. Tyre comprising a rubber composition according to any one of Claims 1 to 6, in which B is substituted by at least one radical chosen from alkyl, cycloalkylalkyl, aryl, aralkyl, hydroxyl, alkoxy, amino and carbonyl radicals.

8. Tyre comprising a composition according to any one of Claims 1 to 7, in which B is substituted by one or more carboxylic acid functional groups and/or by one or more hydrocarbon radicals chosen from alkyl, cycloalkyl, cycloalkylalkyl, aryl or aralkyl radicals, themselves substituted by one or more carboxylic acid functional groups.

9. Tyre comprising a composition according to any one of Claims 1 to 7, in which the B radical does not comprise another carboxylic acid functional group.

10. Tyre comprising a rubber composition according to any one of the preceding claims, in which the content of polyacid is within a range extending from 2 to 100 phr and preferably from 2 to 50 phr.

11. Tyre comprising a rubber composition according to any one of the preceding claims, in which:
- R₁ represents a hydrogen atom or an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms, which group can optionally be interrupted by one or more heteroatoms and/or substituted,
- R₂ represents an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms, which group can optionally be interrupted by one or more heteroatoms and/or substituted,
- R₃ and R₄ independently represent identical or different groups chosen from hydrogen or alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms, which groups can optionally be interrupted by heteroatoms and/or substituted, or else R₃ and R₄ form, together with the carbon atoms of the imidazole ring to which they are attached, a ring chosen from aromatic, heteroaromatic or aliphatic rings comprising from 5 to 12 carbon atoms, preferably 5 or 6 carbon atoms.

12. Tyre comprising a rubber composition according to any one of the preceding claims, in which the imidazole content is within a range extending from 0.5 to 4 molar equivalents and preferably from 0.5 to 3 molar equivalents, with respect to the carboxylic acid functional groups present on the polycarboxylic acid of general formula (I).

13. Tyre comprising a rubber composition according to any one of the preceding claims, in which the olefinic elastomer comprising epoxide functional groups comprises between 50 and 95% and more preferably between 65 and 85% of olefin (molar percentages).

14. Tyre comprising a rubber composition according to any one of the preceding claims, in which the olefinic elastomer comprising epoxide functional groups is an epoxidized ethylenic elastomer.

15. Tyre comprising a rubber composition according to any one of the preceding claims, in which the olefinic elastomer comprising epoxide functional groups represents from 30 to 100 phr, preferably from 50 to 100 phr, as a blend with from 0 to 70 phr, preferably from 0 to 50 phr, of one or more minor non-epoxidized elastomers.
